**Europäisches Patentamt**

**European Patent Office**

**Office européen des brevets**

(19)

(11) Numéro de publication: **O 023 174**
**B1**

(12)

# FASCICULE DE BREVET EUROPEEN

(45) Date de publication du fascicule du brevet: **02.03.83**

(51) Int. Cl.³: **B 23 K 15/00**

(21) Numéro de dépôt: **80401035.3**

(22) Date de dépôt: **09.07.80**

(54) **Procédé de liaison, par bombardement au moyen d'un faisceau d'électrons, d'une pièce de cuivre avec une pièce réalisée en un métal réfractaire.**

(30) Priorité: **18.07.79 FR 7918609**

(43) Date de publication de la demande:
**28.01.81 Bulletin 81/4**

(45) Mention de la délivrance du brevet:
**02.03.83 Bulletin 83/9**

(84) Etats contractants désignés:
**CH DE GB LI**

(56) Documents cités:
**US - A - 3 560 700**
**US - A - 3 794 807**
**US - A - 3 808 395**

**AUTOMATIC WELDING, vol. 28, no. 10, octobre 1975 CAMBRIDGE (GB) N. G. FROLOV et al.: "The electron-beam welding of steel to aluminium, pages 34—37**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Gervais, Yvon**
**16, rue Frédéric Mistral**
**F-38400 Saint Martin d'Heres (FR)**
Inventeur: **Gillet, René**
**9, rue du Docteur Schweitzer**
**F-38100 Grenoble (FR)**
Inventeur: **Tanis, Georges**
**38, Chemin des Buclos**
**F-38240 Meylan (FR)**

(74) Mandataire: **Mongrédien, André et al,**
**c/o Brevatome 25, rue de Ponthieu**
**F-75008 Paris (FR)**

Procédé de liaison, par bombardement au moyen d'un faisceau d'électrons, d'une pièce de
cuivre avec une pièce réalisée en un métal réfractaire

La présente invention concerne un procédé de liaison, par bombardement au moyen d'un faisceau d'électrons, d'une pièce de cuivre avec une pièce réalisée en un métal réfractaire ou en un alliage de métaux réfractaires, avec apport local de chrome ou de nickel.

Ce procédé permet la réalisation d'un joint de soudure sans défauts, et s'applique notamment au domaine de l'électrotechnique.

On sait que la liaison d'une pièce de cuivre avec une pièce réalisée en un métal réfractaire ou encore en un alliage de métaux réfractaires est difficile à effectuer en raison particulièrement de la grande différence entre les températures de fusion des deux métaux à assembler. Or, pour certaines applications, des liaisons de grande qualité sont nécessaires. Ce problème se pose, par exemple, pour l'assemblage de pièces de disjoncteurs réalisées, l'une en un pseudo alliage de cuivre et de tungstène, l'autre en cuivre ou en un alliage de cuivre. Les assemblages réalisés suivant les procédés classiques connus ne sont pas fiables et ne permettent pas d'envisager d'augmenter le pouvoir de coupure des disjoncteurs, alors que cette augmentation est la préoccupation de tous les constructeurs.

Les procédés connus sont d'une part le brasage au chalumeau, et d'autre part le soudage par bombardement au moyen d'un faisceau d'électrons. Ce dernier procédé consiste à fondre la partie cuivre de telle manière qu'elle accroche sur la partie molybdène pour obtenir une liaison métallurgique identique à celle que l'on obtient dans une liaison brasée. Aucun de ces deux procédés connus ne donne de bons résultats.

Le document US - A - 3 808 395 révèle un procédé de liaison par bombardement d'un faisceau d'électrons d'une pièce de cuivre avec une pièce d'un métal léger. L'assemblage est réalisée par un disque intermédiaire d'argent qui est soudé non seulement avec le cuivre mais aussi avec le métal léger.

Les soudures cuivre ordinaire-métal réfractaire réalisées par faisceau d'électrons ne sont pas d'excellente qualité. Elles présentent des défauts de compacité tels que des porosités, des défauts des mouillabilité qui conduisent à une liaison incomplète et des propriétés mécaniques et thermiques peu élevées.

La présente invention a pour objet un procédé de liaison par bombardement au moyen d'un faisceau d'électrons d'une pièce de cuivre avec une pièce réalisée en un métal réfractaire qui permet une liaison sans défauts entre ces deux pièces.

Ce procédé se caractérise en ce qu'on dépose, sur la pièce de cuivre, dans la zone où le faisceau d'électrons provoque sa fusion, une couche de chrome ou de nickel.

De préférence, l'épaisseur de la couche de métal déposée sur la pièce de cuivre est telle que pour le chrome sa teneur dans l'alliage résultant de la fusion provoquée par le faisceau d'électrons, soit de 0,5% au moins et pour le nickel de 3% au moins.

Les résultats obtenus à l'aide du procédé selon l'invention sont encore améliorés si l'on adopte une préparation spéciale des extrémités des pièces à assembler. En effet, la géométrie de l'extrémité de la pièce réalisée en un métal réfractaire sera parfaitement adaptée à la géométrie de la zone fondue, et la mouillabilité sera plus complète sur toute l'épaisseur de la paroi de métal réfractaire.

C'est pourquoi on exécute de préférence un chanfrein incliné d'une dizaine de degrés sur les extrémités des pièces à assembler, les extrémités desdites pièces à assembler étant jointives au moment de la soudure. La valeur de l'angle du chanfrein est comprise entre 0 et 10 degrés et dépend de la forme de la zone fondue d'électrons utilisée. Parmi les matériaux réfractaires on peut citer notamment le molybdène, le tungstène, le niobium, le tantale ainsi que leurs alliages.

Du fait de la meilleure qualité de la liaison, obtenue par le procédé selon la présente invention, des utilisations sous ultra-vide et des applications dans l'énergie électrique des pièces ainsi assemblées sont possibles. En effet, la compacité de la liaison supprimera les dégazages rédhibitoires dans les applications à l'ultra-vide et l'absence de collage des pièces assemblées permettra de faire passer des intensités électriques et des flux thermiques élevés au travers de l'interface.

D'autres caractéristiques et avantages du procédé de liaison selon l'invention apparaîtront encore à la lecture de la description qui suit d'un exemple de réalisation donné à titre indicatif et nullement limitatif.

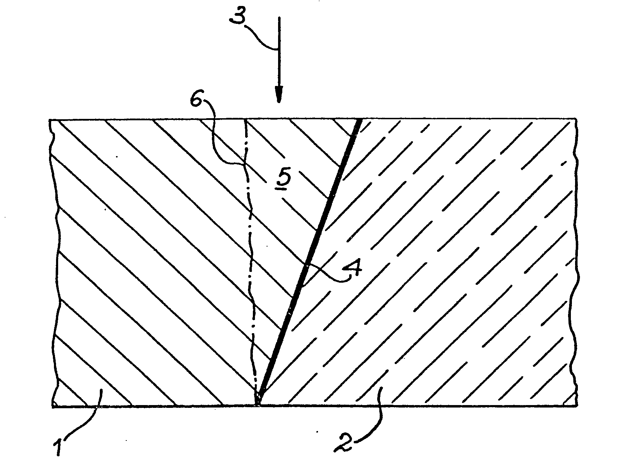

Cette description se réfère à la figure annexée, sur laquelle on a représenté une vue en coupe du plan de joint d'une pièce de cuivre et d'une pièce de molybdène assemblées par le procédé selon l'invention.

Sur cette figure, la référence 1 désigne la pièce de cuivre, tandis que la référence 2 désigne la pièce de molybdène. Les extrémités de ces deux pièces que l'on désire assembler ont été préparées. Sur chacune d'elles, on a réalisé un chanfrein incliné d'une dizaine de degrés. La valeur de l'angle d'inclinaison du plan de joint est comprise entre 0 et 10 degrés et dépend de la forme de la zone fondue que peut permettre d'obtenir la soudeuse par faisceau d'electrons utilisée. La flèche désignée par la référence 3 symbolise le faisceau d'électrons. On remarque que ce faisceau d'électrons est placé au-dessus de la pièce de cuivre, de manière à provoquer la fusion de ce seul métal. Conformément au procédé de l'invention, on a réalisé un apport de chrome ou de nickel 4, dans la zone 5 dont la fusion est provoquée par la faisceau d'électrons 3. Cet apport 4 peut se faire par dépôt électrolytique ou par évaporation. L'épaisseur de ce dépôt est telle que dans la zone 5 délimitée par un pointillé 6, dont on provoque la fusion, des teneurs en chrome de 0,5% au moins et de 3% en nickel au moins soient obtenues. Les meilleurs résultats sont obtenus avec le chrome pour une teneur de 0,7%.

La liaison ainsi réalisée entre la pièce de cuivre et la pièce de molybdène permet d'obtenir un joint sain et sans défauts tels que des porosités ou un manque d'adhérence. De ce fait, des utilisations sous ultra-vide et des applications dans l'énergie électrique des pièces ainsi assemblées sont possibles.

### Exemple I

A titre d'exemple, on a réalisé la liaison à l'aide du procédé selon la présente invention de pièces pour un disjoncteur. On a soudé deux tubes d'un diamètre intérieur de 19 mm et d'un diamètre extérieur de 31 mm réalisés l'un en cuivre, l'autre en un pseudo alliage de tungstène comportant 20% de cuivre. On a également réalisé la liaison de deux tubes d'un diamètre intérieur de 28 mm et d'un diamètre extérieur de 48 mm.

### Exemple II

On a soudé par le procédé selon la présente invention un disque de molybdène d'un diamètre de 180 mm et de 2 mm d'épaisseur à une couronne de cuivre d'un diamètre intérieur de 180 mm, d'un diamètre extérieur de 220 mm et d'une épaisseur de 3,5 mm.

### Revendications

1. Procédé de liaison par bombardement au moyen d'un faisceau d'électrons, d'une pièce de cuivre (1) avec une pièce réalisée en un métal réfractaire (2), caractérisé en ce qu'on dépose, sur la pièce de cuivre (1), dans la zone (5) où le faisceau d'électrons (3) provoque sa fusion, une couche (4) de chrome ou de nickel.

2. Procédé de liaison selon la revendication 1, caractérisé en ce que l'épaisseur de la couche (4) de chrome déposée sur la pièce de cuivre (1) est telle que la teneur en chrome de l'alliage résultant de la fusion provoquée par le faisceau d'électrons (3) soit de 0,5% au moins.

3. Procédé de liaison selon la revendication 1, caractérisé en ce que l'épaisseur de la couche (4) de nickel déposée sur la pièce de cuivre est telle que la teneur en nickel de l'alliage résultant de la fusion provoquée par le faisceau d'électrons (3) soit de 3% au moins.

4. Procédé de liaison selon l'une quelconque des revendications 1 à 3, caractérisé en ce que le métal réfractaire (2) est choisi parmi le groupe comprenant le molybdène, le tungstène, le niobium, le tantale et leurs alliages.

5. Procédé de liaison selon l'une quelconque des revendications 1 à 4, caractérisé en ce qu'on exécute un chanfrein incliné d'une dizaine de degrés sur chacune des extrémités des pièces (1, 2) à assembler, les extrémités desdites pièces (1, 2) étant jointives au moment de la soudure.

### Claims

1. Process for bonding a copper workpiece (1) to a refractory metal workpiece (2) by electron beam bombardment characterized in that a layer (4) of chromium or nickel is deposited on the copper workpiece (1) in the zone thereof (5) which is fused by the electron beam (3).

2. Bonding process according to Claim 1 characterized in that the chrome layer (4) deposited on the copper workpiece (1) has a thickness such that the alloy formed by fusion produced by the electron beam (3) has a chromium content of at least 0.5%.

3. Bonding process according to Claim 1 characterized in that the nickel layer (4) deposited on the copper workpiece (1) has a thickness such that the alloy formed by fusion produced by the electron beam (3) has a nickel content of at least 3%.

4. Bonding process according to any one of Claims 1 to 3, characterized in that the refractory metal (2) is selected from the group comprising molybdenum, tungsten, niobium, tantalum, and their alloys.

5. Bonding process according to any one of Claims 1 to 4 characterized in that a chamfer inclined at an angle of up to about ten degrees is provided at the end of each of the workpieces (1, 2) to be assembled, the ends of said workpieces (1,2) being contacted at the moment of welding.

### Patentansprüche

1. Verfahren zum Verbinden eines Stückes aus Kupfer (1) mit einem aus einem schwer schmelzbaren Metall gefertigten Stück (2) durch Beschuß mit einem Elektronenstrahl, Dadurch gekennzeichnet, daß man in dem Bereich (5), in welchem der Elektronenstrahl (3) die Verschmelzung herbeiführt, eine Schicht (4) aus Chrom oder Nickel auf das kupferne Stück (1) aufbringt.

2. Verbindungsverfahren nach Anspruch 1, dadurch gekennzeichnet, daß die Dicke der auf das kupferne Stück (1) aufgebrachten Chromschicht (4) derart bemessen ist, daß der Chromgehalt der bei der durch den Elektronenstrahl (3) hervorgerufenen Verschmelzung entstehenden Legierung wenigstens 0,5% beträgt.

3. Verbindungsverfahren nach Anspruch 1, dadurch gekennzeichnet, daß die Dicke der auf das kupferne Stück aufgebrachten Nickelschicht (4) so bemessen ist, daß der Nickelgehalt der bei der durch den Elektronenstrahl (3) hervorgerufenen Verschmelzung entstehenden Legierung wenigstens 3% beträgt.

4. Verbindungsverfahren nach wenigstens einem der Ansprüche 1 bis 3, dadurch gekennzeichnet, daß das schwer schmelzbare Metall (2) aus der Molybdän, Wolfram, Niob, Tantal und deren Legierungen umfassenden Gruppe gewählt ist.

5. Verbindungsverfahren nach wenigstens einem der Ansprüche 1 bis 4, dadurch gekennzeichnet, daß man an den Enden jedes der miteinander zu verbindenden Stücke (1, 2) eine um etwa zehn Grad geneigte Abschrägung formt, und daß die Enden der genannten Stücke (1, 2) im Augenblick der Schweißung aneinanderstoßen.